# FASCICULE DE BREVET EUROPEEN

(11) **EP 0 407 321 B1**
(45) Date de publication et mention de la délivrance du brevet: **03.11.1993**
(21) Numéro de dépôt: 90440061.1
(22) Date de dépôt: 05.07.1990
(51) Int. Cl.: A01D 34/66, A01D 43/10

(54) **Faucheuse-conditionneuse munie d'organes de modification du flux d'air engendré par les organes de coupe**
Mähconditioner mit Mitteln zum Ändern des von den Schneidorganen erzeugten Luftstroms
Mowerconditioner with means intended to modify the current of air produced by the cutting means

(30) Priorité: 07.07.1989 FR 8909364
(43) Date de publication de la demande: 09.01.1991
(73) Titulaire: KUHN S.A., F-67700 Saverne (FR)
(72) Inventeur: Lambour, Raymond, F-67440 Reutenbourg (FR)

(56) Documents cités:
- EP-A- 0 099 314
- EP-A- 0 297 011
- DE-A- 1 582 342
- DE-A- 3 419 358
- DE-B- 1 582 375
- DE-U- 8 811 183

## Description

La présente invention concerne une faucheuse-conditionneuse comportant :
- au moins un groupe de fauche muni d'organes de coupe disposés au-dessus d'un carter suivant une rangée transversale à la direction d'avance au travail et comportant chacun au moins un outil de coupe, lesdits organes de coupe tournant chacun autour d'un axe correspondant dirigé vers le haut de telle sorte qu'il existe pour chaque organe de coupe intermédiaire une zone où son (ses) outil(s) de coupe se déplace(nt), compte tenu du sens d'avance au travail, vers l'avant lors de la rotation dudit organe de coupe intermédiaire,
- un groupe de conditionnement associé audit groupe de fauche, en particulier du type comportant deux rouleaux de conditionnement s'étendant également transversalement à la direction d'avance au travail et tournant chacun autour de son axe longitudinal afin de faire passer entre eux le produit coupé et projeté vers l'arrière par les organes de coupe.

Une faucheuse-conditionneuse de ce type est connue par la EP-A-0 297 011 par exemple.

De telles faucheuses-conditionneuses sont employées pour faucher un produit à récolter, puis traiter mécaniquement le produit coupé en vue d'accélérer son séchage. Ce traitement mécanique est réalisé par les deux rouleaux de conditionnement qui s'étendent derrière la zone de coupe des organes de coupe et entre lesquels passe le produit coupé par lesdits organes de coupe.

Le produit coupé par les organes de coupe est forcé de passer entre les deux rouleaux de conditionnement par l'action simultanée de projection réalisée par les organes de coupe rotatifs et de happement réalisée par les rouleaux de conditionnement.

A cet effet, les organes de coupe doivent présenter, à leur partie supérieure notamment, une certaine forme apte à générer cette action de projection du produit coupé vers la zone de happement des rouleaux de conditionnement. Si cette forme favorise grandement la projection du produit coupé vers les rouleaux de conditionnement, elle engendre également un important déplacement d'air.

Malgré cela, de telles faucheuses-conditionneuses fonctionnent correctement dans la plupart des conditions. Il a cependant pu être rencontré des conditions dans lesquelles, il subsistait dans le champ des traînées de produit non coupé. Ceci est bien entendu inacceptable.

En analysant ce phénomène, il a alors pu être déterminé que les rouleaux de conditionnement s'étendant derrière les organes de coupe, forment un véritable écran aux flux d'air engendrés par les organes de coupe lors de leur rotation. De ce fait, il apparaît, aux endroits où les outils de coupe des organes de coupe intermédiaires se déplacent dans le sens d'avance au travail, des flux d'air relativement importants qui sont dirigés vers l'avant. Le produit à couper, notamment quand celui-ci est court, qui se présente en ces endroits, est alors tellement plié vers l'avant par ces flux d'air, qu'il ne peut plus être coupé par les organes de coupe.

Dans la DE-A-1 582 342, on a déjà proposé des solutions pour tenter de dévier les flux d'air néfastes engendrés par les organes de coupe rotatifs d'une faucheuse entraînés par le bas.

Au-dessus d'un carter sont disposés des organes de coupe rotatifs réalisés sous forme de disques ronds portant à leur périphérie deux couteaux diamétralement opposés l'un de l'autre. Ces différents disques sont entraînés en rotation par des organes de transmission logés sans ledit carter de telle sorte que deux disques adjacents tournent en sens contraire. Le produit coupé par les couteaux est concentré dans la zone située entre deux disques dont les sens de rotation convergent à l'avant du carter, puis évacué vers l'arrière par projection par-dessus lesdits disques.

Il est expliqué que dans la zone entre deux disques adjacents dont les sens de rotation divergent à l'avant du carter, est généré un flux d'air dans la direction d'avance au travail. Ce flux d'air plie les brins de faible taille vers l'avant de telle sorte que les couteaux ne puissent plus couper ceux-ci ou du moins de manière non-satisfaisante. Il subsiste donc à cet endroit une traînée mal coupée.

Pour tenter de résoudre ce problème, il est proposé suivant une première réalisation d'implanter deux parois circulaires sous les disques qui engendrent les flux d'air néfastes. La paroi extérieure qui est en vue de dessus un cercle complet concentrique à l'axe de rotation du disque correspondant est fixée à ce dernier tandis que la paroi intérieure qui est en vue de dessus uniquement une portion de cercle également concentrique à l'axe de rotation dudit disque, est fixée au carter. Les deux parois s'étendant très près l'une de l'autre, doivent éviter que le flux d'air ne sorte radialement vers l'extérieur. Comme ces parois s'étendent sous les disques, elles ne peuvent avoir aucune influence sur les flux d'air engendrés au-dessus des disques.

Il est également proposé, suivant une deuxième réalisation, de pratiquer des bossages à la partie supérieure des disques qui engendrent les flux d'air néfastes. Ces bossages doivent engendrer un flux d'air axial et ainsi éviter qu'un flux d'air radial dirigé vers l'extérieur n'apparaisse. Si ces flux d'air axiaux dirigés vers le haut permettent probablement d'atteindre le but recherché, ils risquent cependant de perturber considérablement l'écoulement du produit coupé par-dessus les disques, ceci d'autant plus si la faucheuse comporte un groupe de conditionnement s'étendant derrière le carter supportant les disques.

Dans la DE-A-1 582 375 est décrite une faucheuse du type à organes rotatifs entraînés par le haut, réalisés sous forme de tambours.

Sous une poutre porteuse s'étendent des tambours rotatifs qui y sont guidés en rotation de sorte à tourner autour d'axes respectifs dirigés vers le haut. A sa périphérie inférieure circulaire, chaque tambour est muni de deux couteaux diamétralement opposés l'un de l'autre.

Dans cette faucheuse connue, il est prévu que tous les tambours tournent dans le même sens de telle sorte que tout le produit coupé par les divers tambours soit déplacé latéralement pour être déposé en un andain à côté du dernier tambour. Pour éviter que du produit coupé ne puisse passer entre deux tambours adjacents, il est prévu de fermer cet espace à l'aide d'un organe d'obturation.

Dans un premier mode de réalisation, cet organe obture entièrement l'espace entre deux tambours.

Dans un deuxième mode de réalisation, cet organe n'obture que la moitié dudit espace et est situé dans le voisinage du tambour dont le sens de rotation est dirigé vers l'arrière au niveau dudit espace.

Le but de la présent invention est d'apporter une solution aux problèmes de soufflerie qui peuvent apparaître sur les faucheuses-conditionneuses du type de celle décrite dans la EP-A-0 297 011 en particulier et de celle décrite dans le préambule de la revendication 1 en général, sans pour autant perturber le bon écoulement du produit coupé vers le groupe de conditionnement.

A cet effet, la présente invention prévoit qu'au moins dans la zone où le (les) outil(s) de coupe d'un organe de coupe intermédiaire se déplace(nt), compte tenu du sens d'avance au travail, vers l'avant lors de la rotation dudit organe de coupe, soit implanté un organe stationnaire destiné à modifier le flux d'air engendré par ledit (lesdits) organe(s) de coupe intermédiaire(s) correspondant(s), ledit organe de modification du flux d'air qui s'étend plus haut que ledit (lesdits) organe(s) de coupe intermédiaire(s) correspondant(s), ayant son extrémité inférieure qui s'étend dans le voisinage du (desdits) organe(s) de coupe intermédiaire(s) correspondant(s) et, en vue de dessus, au moins sensiblement à l'intérieur de la (des) trajectoire(s) extrême(s) décrite(s) par le (lesdits) outils de coupe du (desdits) organe(s) de coupe intermédiaire(s) correspondant(s).

Grâce à cette caractéristique, le problème qui existe avec les faucheuses-conditionneuses en particulier du type à rouleaux, de l'art antérieur, est éliminé.

En effet, l'organe de modification du flux d'air, dont l'extrémité inférieure s'étend dans le voisinage du (des) organe(s) de coupe intermédiaire(s) correspondant(s), forme un écran aux flux d'air dirigés vers l'avant et stoppe ou dévie ceux-ci, de telle sorte que le flux d'air résiduel dirigé vers l'avant soit quasi nul, voire nul. Il a en effet pu être constaté, dans les conditions évoquées ci-avant, qu'avec un tel organe de modification du flux d'air, même le produit qui se trouve à quelques centimètres devant lui, restait quasiment, voire parfaitement droit.

Comme du reste, il est prévu que l'extrémité inférieure de l'organe de modification du flux d'air s'étend, en vue de dessus, au moins sensiblement à l'intérieur de la (des) trajectoire(s) extrême(s) décrite(s) por le (les) outil(s) de coupe du (des) organes(s) de coupe intermédiaire(s) correspondant(s), on s'assure que ledit organe de modification du flux d'air ne plie pas lui-même le produit à couper.

Il est enfin également prévu que ledit organe de modification du flux d'air s'étende de manière stationnaire plus haut que ledit (lesdits) organe(s) de coupe intermédiaire(s) correspondant(s). L'organe de modification du flux d'air ne tourne donc pas avec ledit (lesdits) organe(s) de coupe et ne crée en conséquence aucun effet néfaste sur le produit coupé qui doit être transporté jusqu'au groupe de conditionnement.

Selon une caractéristique suplémentaire de l'invention, il peut être prévu que la partie travaillante de l'organe de modification du flux d'air présente à l'arrière, compte tenu du sens d'avance au travail, une face déflectrice s'étendant transversalement à la direction d'avance au travail et dirigée vers le haut.

Avantageusement, cette face déflectrice est incurvée et préférentiellement concave. Grâce à cette dernière caractéristique, le flux d'air est divisé en deux et chaque demi-flux est dirigé latéralement vers l'extérieur et plus ou moins vers l'arrière.

La division du flux d'air et le guidage des deux demi-flux peuvent encore être améliorés si la face déflectrice comporte une nervure dirigée vers le haut et dont le sommet est dirigé vers l'arrière, de sorte que ladite face déflectrice présente deux surfaces concaves adjacentes.

Selon une autre caractéristique supplémentaire de l'invention, il peut également être prévu que la partie travaillante de l'organe de modification du flux d'air présente, compte tenu du sens d'avance au travail, une face frontale s'étendant transversalement à la direction d'avance au travail et dirigée vers le haut.

Avantageusement, cette face frontale est incurvée et de préférence convexe. Grâce à cette dernière caractéristique, le produit coupé par (les) organes de coupe associé(s) audit organe de modification du flux d'air passe bien de part et d'autre dudit organe de modification du flux d'air.

Une réalisation particulièrement simple d'un tel organe de modification du flux d'air est obtenue lorsque la partie travaillante de celui-ci est constituée par une paroi mince.

Cette paroi peut être rigide ou déformable. Dans ce dernier cas, elle sera avantageusement réalisée en une matière flexible, de préférence en caoutchouc.

Lorsque la paroi mince formant la partie travaillante de l'organe de modification du flux d'air est réalisée en une matière flexible, il est également particulièrement intéressant qu'elle soit incurvée de telle sorte que sa face déflectrice, c'est-à-dire celle qui est en regard du groupe de conditionnement, soit concave. Dans ce cas en effet, ladite paroi mince peut être facilement déformée vers l'arrière pour s'effacer en cas de rencontre avec un obstacle, mais possède par contre une excellente rigidité vers l'avant, de telle sorte que le flux d'air qu'elle doit dévier, ne la déforme par vers l'avant.

Selon une autre caractéristique supplémentaire de l'invention, il peut être prévu qu'en vue suivant la direction d'avance au travail, l'extrémité inférieure de la partie travaillante de l'organe de modification du flux d'air présente une forme qui suit au moins sensiblement le contour extérieur supérieur du volume engendré par l'(les) organe(s) de coupe correspondant(s) lors de leur rotation. L'organe de modification du flux d'air forme ainsi un écran total au flux d'air engendré par ledit(lesdits) organe(s) de coupe correspondant(s).

Selon une réalisation simplifiée, il est cependant possible de prévoir que l'extrémité inférieure de l'organe de modification du flux d'air soit droite et s'étende au moins sensiblement horizontalement.

Selon une autre caractéristique supplémentaire de l'invention, il peut être prévu pour un organe de modification du flux d'air associé à deux organes de coupe voisins dont les sens de rotation divergent vers l'avant, qu'au moins sa partie travaillante ait une largeur au plus égale à la distance séparant les deux axes de rotation de ces deux organes de coupe.

En pratique, il s'est avéré que des bons résultats sont déjà obtenus lorsque la largeur de la partie travaillante est environ égale à la moitié de la distance séparant les deux axes de rotation des deux organes de coupe associés.

Selon une autre caractéristique supplémentaire de l'invention, il peut également être prévu, pour un organe de modification du flux d'air associé à deux organes de coupe voisins, dont les sens de rotation divergent vers l'avant, qu'au moins la partie travaillante s'étende, en vue suivant la direction d'avance au travail, au moins sensiblement symétriquement entre les deux axes de rotation de ces deux organes de coupe.

Selon une autre caractéristique supplémentaire de l'invention, il peut être prévu, qu'en vue de dessus, au moins l'extrémité inférieure de la partie travaillante d'un organe de modification du flux d'air s'étende dans le voisinage de la ligne joignant les deux axes de rotation des deux organes de coupe correspondants ou devant cette ligne.

Selon une autre caractéristique supplémentaire de l'invention, il est prévu qu'un dispositif de liaison lie l'organe de modification du flux d'air de manière amovible à la faucheuse-conditionneuse. Ceci permet notamment de démonter ledit organe de modification du flux d'air dans les conditions où son emploi est inutile ou de le remplacer lorsqu'il est détérioré ou usé.

Selon une caractéristique supplémentaire, il peut être prévu que ce dispositif de liaison comporte des moyens de réglage permettant le réglage de la position notamment de la partie travaillante de l'organe de modification du flux d'air au moins sensiblement suivant la direction d'avance au travail et/ou au moins sensiblement suivant une direction en hauteur. Cette caractéristique permet une adaptation optimale de l'organe de modification du flux d'air aux différentes conditions rencontrées.

Selon une autre caractéristique supplémentaire de l'invention, il peut être prévu que l'organe de modification du flux d'air comporte une partie de liaison déformable. Cette caractéristique est notamment intéressante lorsque la partie travaillante est relativement rigide. Elle permet en effet à ladite partie travaillante de s'effacer en cas de rencontre avec un obstacle. Une réalisation particulièrement simple d'une telle partie de liaison déformable sera obtenue lorsque celle-ci sera prévue en matière flexible. Avantageusement cette matière flexible sera du caoutchouc.

Selon une autre caractéristique supplémentaire de l'invention, il peut également être prévu que la partie de liaison de l'organe de modification du flux d'air présente une forme de paroi mince.

Lorque la paroi mince formant la partie de liaison de l'organe de modification du flux d'air, est réalisée en une matière flexible, il est également particulièrement intéressant qu'elle soit incurvée de telle sorte que sa face concace soit dirigée vers l'arrière. Dans ce cas, ladite partie de liaison peut être facilement déformée vers l'arrière pour permettre à la partie travaillante, laquelle pourra être, dans ce cas, relativement rigide, de s'effacer en cas de rencontre avec un obstacle, mais possède par contre une excellente rigidité vers l'avant, de telle sorte que le flux d'air ne puisse pas déplacer ladite partie travaillante vers l'avant.

Une réalisation particulièrement intéressante d'un tel organe de modification du flux d'air peut être obtenue lorsque celui-ci est constitué par une pièce unique formant à la fois la partie travaillante et la partie de liaison.

L'invention sera bien comprise grâce à la description ci-dessous de quelques exemples non limitatifs de réalisation faite en référence au dessin annexé, sur lequel :
- la figure 1 représente schématiquement une vue de dessus partiellement en coupe suivant le plan I-I défini sur la figure 2 d'une faucheuse-conditionneuse selon l'invention,
- la figure 2 représente une coupe suivant le plan II-II défini sur la figure 1 de la faucheuse-conditionneuse de la figure 1,
- la figure 3 représente une vue de devant suivant la flêche III définie sur la figure 1 de la faucheuse-conditionneuse des figures 1 et 2,
- la figure 4 représente à une échelle agrandie, une vue en coupe suivant le plan IV défini sur la figure 3,
- la figure 5 représente à une échelle agrandie, une vue en coupe suivant le plan V défini sur la figure 3,
- la figure 6 représente une vue de côté d'un autre exemple de réalisation d'un organe de modification du flux d'air,
- la figure 7 représente une vue de dessus de l'organe de modification du flux d'air de la figure 6,
- la figure 8 représente une vue en coupe suivant le plan VIII défini sur la figure 6,
- la figure 9 représente une vue en coupe suivant le plan IX défini sur la figure 10, d'un autre exemple de réalisation d'un organe de modification du flux d'air, et
- la figure 10 représente une vue de dessus de l'organe de modification du flux d'air de la figure 9.

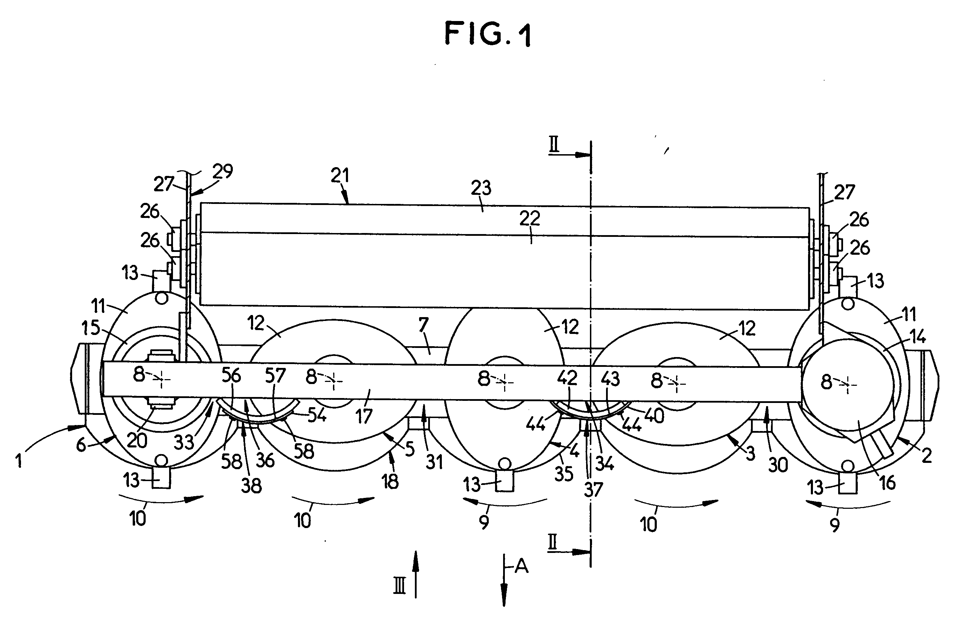

La faucheuse-conditionneuse représentée sur les figures 1 à 3, comporte un groupe de fauche (1) muni de manière non limitative de cinq organes de coupe (2, 3, 4, 5, 6). Les organes de coupe (2, 3, 4, 5, 6) sont guidés en rotation à la face supérieure d'un carter (7) et tournent chaucun autour d'un axe (8) dirigé vers le haut. Les organes de coupe (2 et 4) tournent dans le sens défini par la flêche (9), tandis que les organes de coupe (3, 5 et 6) tournent dans le sens contraire défini par la flêche (10).

Les organes de coupe (2, 3, 4, 5, 6) sont disposés suivant une rangée s'étendant au moins sensiblement perpendiculairement à la direction d'avance (A) au travail. Chaque organe de coupe (2, 3, 4, 5, 6) est constitué par un support d'outils de coupe (11, 12) et par des outils de coupe (13). Les organes de coupe d'extrémité (2, 6), contrairement aux organes de coupe intermédiaires (3, 4, 5), sont, en sus, munis chacun d'un tambour rotatif (14, 15) qui surmonte le support d'outils de coupe (11) correspondant.

Au-dessus de l'organe de coupe d'extrémité (2) est agencé un carter de renvoi (16) destiné à transmettre le mouvement aux organes de coupe (2, 3, 4, 5, 6).

Au-dessus des organes de coupe (2, 3, 4, 5, 6) est, par ailleurs, prévue une poutre porteuse (17) qui s'étend à une certaine distance au dessus des organes de coupe (2, 3, 4, 5, 6) au moins sensiblement dans le plan contenant les axes de rotation (8) desdits organes de coupe (2, 3, 4, 5, 6) et au moins sensiblement parallèlement au carter (7). Cette poutre porteuse (17) est liée à l'une de ses extrémités au carter de renvoi (16).

La barre de coupe (18) formée par le carter (7) et les organes de coupe (2, 3, 4, 5, 6) qu'il porte, est liée au carter de renvoi (16) au moyen d'un fût (19) et à l'extrémité de la poutre porteuse (17), éloignée du carter de renvoi (16), au moyen d'une jambe (20).

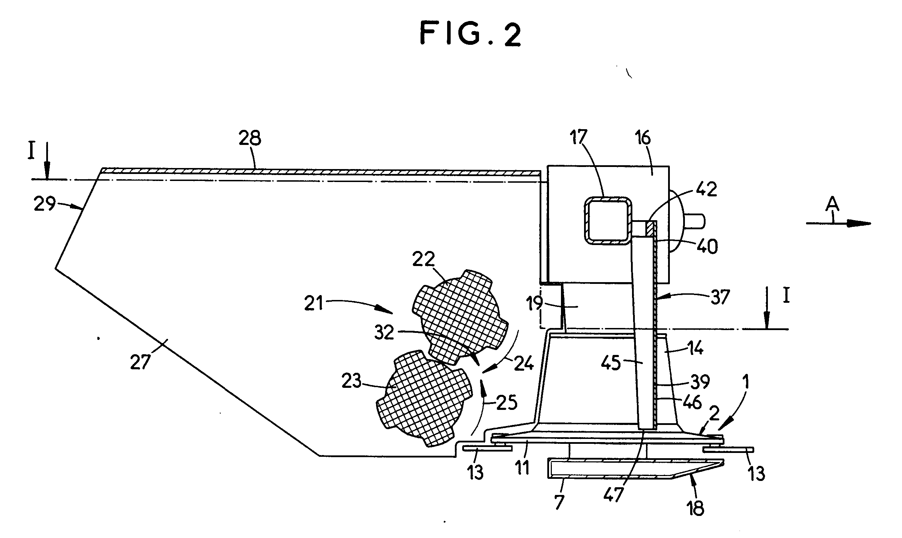

Derrière le groupe de fauche (1) s'étend un groupe de conditionnement (21). Ce groupe de conditionnement (21) comporte deux rouleaux de conditionnement (22, 23) qui s'étendent sensiblement l'un au-dessus de l'autre et au moins sensiblement perpendiculairement à la direction d'avance (A) au travail. Ces rouleaux de conditionnement (22, 23) tournent autour de leur axe longitudinal respectif et en sens inverses suivant les flêches (24, 25) définies sur la figure 2, de sorte que le produit coupé par les organes de coupe (2, 3, 4, 5, 6) passe entre lesdits rouleaux de conditionnement (22, 23) pour y subir le traitement souhaité. Ces rouleaux de conditionnement (22, 23) sont chacun guidés en rotation dans des paliers (26) aménagés sur des parois latérales (27). Ces parois latérales (27) s'étendent au moins sensiblement verticalement et au moins sensiblement suivant la direction d'avance (A) au travail. A leur extrémité supérieure respective, les deux parois latérales (27) sont liées entre elles par un capot (28) au moins sensiblement horizontal. Ce capot (28) et les deux parois latérales (27) forment ainsi un canal de conditionnement (29) qui fait partie du groupe de conditionnement (21) et dans lequel s'étendent les deux rouleaux de conditionnement (22, 23).

Au travail, les organes de coupe (2, 4) tournent, comme dit ci-avant, dans le sens de rotation (9), tandis que les organes de coupe (3, 5 et 6) tournent dans le sens de rotation contraire (10). Ainsi, en considérant la figure 1, il apparaît en partant de la droite de la figure vers la gauche, que l'organe de coupe d'extrémité droit (2) et le premier organe de coupe intermédiaire (3) forment une paire d'organes de coupe (2;3) contrarotatifs, dont les sens de rotation (9 ; 10) respectifs convergent à l'avant du carter (7). De même, le deuxième organe de coupe intermédiaire (4) et le troisième organe de coupe intermédiaire (5) forment également une paire d'organes de coupe (4 ; 5) contrarotatifs, dont les sens de rotation (9 ; 10) respectifs convergent également à l'avant du carter (7). L'organe de coupe d'extrémité gauche (6), quant à lui, tourne dans le sens de rotation (10), contraire du sens de rotation (9) de l'organe de coupe d'extrémité droit (2), de sorte à amener le produit qu'il a coupé, à l'intérieur du canal de conditionnement (29). Le produit coupé par chaque paire d'organes de coupe (2, 3 ; 4, 5) contrarotatifs est ainsi sensiblement concentré dans la partie médiane (30 : 31) entre les deux organes de coupe (2, 3 ; 4, 5) de ladite paire, puis est projeté vers l'arrière dans la zone de happement (32) (figure 2) des deux rouleaux de conditionnement (22, 23). Une partie au moins du produit coupé par l'organe de coupe d'extrémité gauche (6) est concentré dans la zone (33) située du côté du tambour (15) en regard de l'organe de coupe intermédiaire (5) adjacent, puis est également projeté par ledit organe de coupe d'extrémité (6) vers l'arrière dans la zone de happement (32) des deux rouleaux de conditionnement (22, 23).

En considérant la figure 1, il apparait aussi très clairement que le premier organe de coupe intermédiaire (3) et le deuxième organe de coupe intermédiaire (4) forment une paire d'organes de coupe (3 ; 4) contrarotatifs, dont les sens de rotation (10 ; 9) respectifs divergent à l'avant du carter (7). En d'autres termes, dans la zone (34) située entre les axes de rotation (8) des deux organes de coupe intermédiaires (3, 4), les outils de coupe (13) de ces organes de coupe intermédiaires (3, 4) se déplacent lors du mouvement de rotation, vers le bord frontal (35) du carter (7).

Il apparaît, par ailleurs, que dans la zone (36) située entre le troisième organe de coupe intermédiaire (5) et l'organe de coupe d'extrémité gauche (6), les outils de coupe (13) dudit organe de coupe intermédiaire (5) se déplacent également, lors du mouvement de rotation, vers le bord frontal (35) du carter (7).

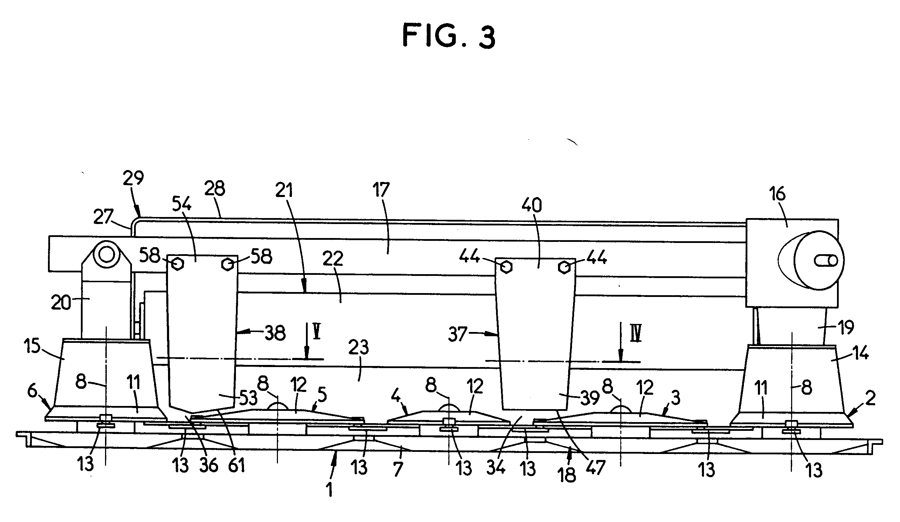

Comme dit ci-avant, les organes de coupe (2, 3 ; 4, 5) évacuent le produit qu'ils ont coupé en le faisant passer par la partie médiane (30 ; 31) s'étendant entre eux. Ce faisant, chaque paire d'organes de coupe (2, 3 ; 4, 5) déplace également une certaine masse d'air. Ne pouvant pratiquement pas sortir par l'arrière, étant donné que les rouleaux de conditionnement (22, 23) forment, comme cela apparaît très précisement sur la figure 3, un véritable écran, ces masses d'air sont alors concentrées dans la zone (34), respectivement dans la zone (36) et réentraînées vers l'avant par les organes de coupe intermédiaires (3, 4), respectivement par l'organe de coupe intermédiaire (5).

Pour éviter que ces masses d'air ne soient évacuées vers l'avant suivant des flux d'air qui plieraient le produit se présentant en ces endroits, à un point tel que les outils de coupe (13) desdits organes de coupe (3, 4, 5) ne pourraient plus couper ledit produit, on a prévu selon l'invention, d'agencer dans ces zones (34 ; 36) des organes de modification du flux d'air (37 ; 38).

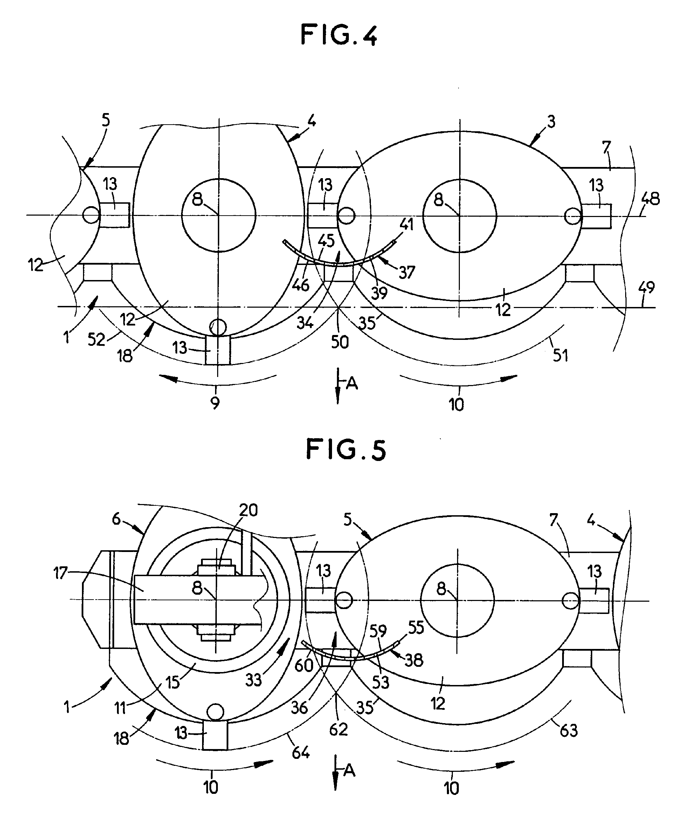

L'organe de modification du flux d'air (37) qui est associé aux organes de coupe intermédiaires (3, 4), s'étend, en vue suivant la direction d'avance (A) au travail, au moins sensiblement symétriquement entre les deux organes de coupe intermédiaires (3, 4) correspondants (figure 4). Cet organe de modification du flux d'air (37) comporte une partie travaillante (39), destinée à s'étendre dans le flux d'air engendré par les organes de coupe intermédiaires (3, 4) dans la zone (34), et une partie de liaison (40) par l'intermédiaire de laquelle ledit organe de modification du flux d'air (37) est lié à la poutre porteuse (17). En fait, l'organe de modification du flux d'air (37), selon cet exemple de réalisation, est constitué par une paroi mince unique (41) réalisée en une matière flexible, en l'occurence du caoutchouc. Cette paroi mince unique (41) constitue à la fois la partie travaillante (39) et la partie de liaison (40).

Afin de pouvoir lier ledit organe de modification du flux d'air (37) à la poutre porteuse (17), il est prévu que celle-ci comporte un support (42) présentant une face avant (43) convexe ayant, en vue de dessus, une forme de portion de suface sensiblement cylindrique. La partie de liaison (40) de l'organe de modification du flux d'air (37) est mise en contact avec cette face avant (43) du support (42) et y est fixée au moyen de vis (44) vissées dans des trous filetés (non-représentés) réalisés dans ledit support (42). L'organe de modification du flux d'air (37) est ainsi fixé à la poutre porteuse (17) et s'étend vers le bas en direction des organes de coupe intermédiaires (3, 4) correspondants.

Comme expliqué ci-avant, la partie le liaison (40) de l'organe de modification du flux d'air (37) est mise en contact avec la face avant (43) du support (42). De ce fait, elle adopte la forme de ladite face avant (43), c'est-à-dire qu'en vue de dessus, elle présente une forme incurvée, dont la concavité est dirigée vers l'arrière, compte tenu du sens d'avance (A) au travail.

La partie travaillante (39) prend d'ailleurs une forme semblable (figure 4), de sorte que celle-ci présente alors à l'arrière, compte tenu du sens d'avance (A) au travail, une face déflectrice (45) concave et une face frontale (46) convexe. Sur les figures, il apparait du reste très précisément que cette face déflectrice (45) et cette face frontale (46) s'étendent transversalement à la direction d'avance (A) au travail et sont dirigées vers le haut, en l'occurence au moins sensiblement verticalement. Il apparait également très précisément sur la figure 4, que la partie travaillante (39), notamment l'extrémité inférieure (47) de celle-ci (figure 3), s'étend, en vue de dessus, sensiblement à mi-distance, entre la ligne (48) liant les deux axes de rotation (8) des deux organes de coupe (3, 4) et la ligne (49) parallèle à la ligne (48) et passant par le point d'intersection avant (50) des trajectoires extrêmes (51, 52) décrites par les outils de coupe (13) desdits organes de coupe (3, 4). Il apparaît enfin encore que la largeur de la partie travaillante (39), notamment de l'extrémité inférieure (47) de celle-ci, est environ égale à la moitié de la distance séparant les deux axes de rotation (8) des deux organes de coupe (3, 4) correspondants.

L'extrémité inférieure (47) de l'organe de modification du flux d'air (37) s'étend dans le voisinage de la face supérieure des supports d'outils de coupe (12) des organes de coupe (3, 4) correspondants. Cette extrémité inférieure (47) est, en vue suivant la direction d'avance (A) au travail, au moins sensiblement droite et s'étend au moins sensiblement horizontalement et transversalement à ladite direction d'avance (A) au travail.

L'organe de modification du flux d'air (38) qui est associé à l'organe de coupe intermédiaire (5), est similaire à l'organe de modification du flux d'air (37). Cet organe de modification du flux d'air (38) comporte une partie travaillante (53) destinée à s'étendre dans le flux d'air engendré par l'organe de coupe intermédiaire (5) dans la zone (36) et une partie de liaison (54) par l'intermédiaire de laquelle ledit organe de modification du flux d'air (38) est lié à la poutre porteuse (17). Cet organe de modification du flux d'air (38) est également constitué par une paroi mince unique (55) réalisée en une matière flexible, en l'occurence du caoutchouc. Cette paroi mince unique (55) constitue à la fois la partie travaillante (53) et partie de liaison (54).

Afin de pouvoir lier ledit organe de modification du flux d'air (38) à la poutre porteuse (17), il est prévu que celle-ci comporte un support (56) présentant une face avant (57) convexe ayant, en vue de dessus, une forme de portion de surface sensiblement cylindrique. La partie de liaison (54) de l'organe de modification du flux d'air (38) est mise en contact avec cette face avant (57) du support (56) et y est fixée au moyen de vis (58) vissées dans des trous filetés (non représentés) réalisés dans ledit support (56). L'organe de modification du flux d'air (38) est ainsi fixé à la poutre porteuse (17) et s'étend vers le bas en direction de l'organe de coupe intermédiaire (5) correspondant.

Comme expliqué ci-avant, la partie de liaison (54) de l'organe de modification du flux d'air (38) est mise en contact avec la face avant (57) du support (56). De ce fait, elle adopte la forme de ladite face avant (57), c'est-à-dire qu'en vue de dessus, elle présente une forme incurvée, dont la concavité est dirigée vers l'arrière, compte tenu du sens d'avance (A) au travail. La partie travaillante (53) prend également une forme semblable, de sorte que celle-ci présente alors à l'arrière, compte tenu du sens d'avance (A) au travail, une face déflectrice (59) concave et une face frontale (60) convexe. Cette face déflectrice (59) et cette face frontale (60) s'étendent transversalement à la direction d'avance (A) au travail et sont dirigés vers le haut. Il apparaît par ailleurs sur la figure 5 que la partie travaillante (53), notamment l'extrémité inférieure (61) de celle-ci (figure 3), s'étend, en vue de dessus, plus près du point d'intersection avant (62) des trajectoires extrêmes (63, 64) decrites par les outils de coupe (13) des organes de coupe (5, 6), que la partie travaillante (39) de l'organe de modification du flux d'air (37). Du reste, il apparait également que cette partie travaillante (53) ne s'étend pas symétriquement entre l'organe de coupe intermédiaire (5) et l'organe de coupe d'extrémité (6), mais est, au contraire, quelque peu décalée vers l'organe de coupe intermédiaire (5). Ces deux dernières caractéristiques permettent de dégager une zone (33) suffisante pour permettre le passage d'une partie au moins du produit coupé par l'organe de coupe d'extrémité (6). Il apparaît enfin encore que la largeur de la partie travaillante (53), notamment de l'extrémité inférieure (61) de celle-ci, est environ égale à la moitié de la distance séparant les deux axes de rotation (8) des deux organes de coupe (5, 6).

L'extrémité inférieure (61) de l'organe de modification du flux d'air (38) s'étend dans le voisinage de la face supérieure des supports d'outils de coupe (12, 11) des organes de coupe (5, 6). Cette extrémité inférieure (61) présente, en vue suivant la direction d'avance (A) au travail, une forme qui suit au moins sensiblement le contour extérieur supérieur du volume engendré par les organes de coupe (5, 6) lors de leur rotation.

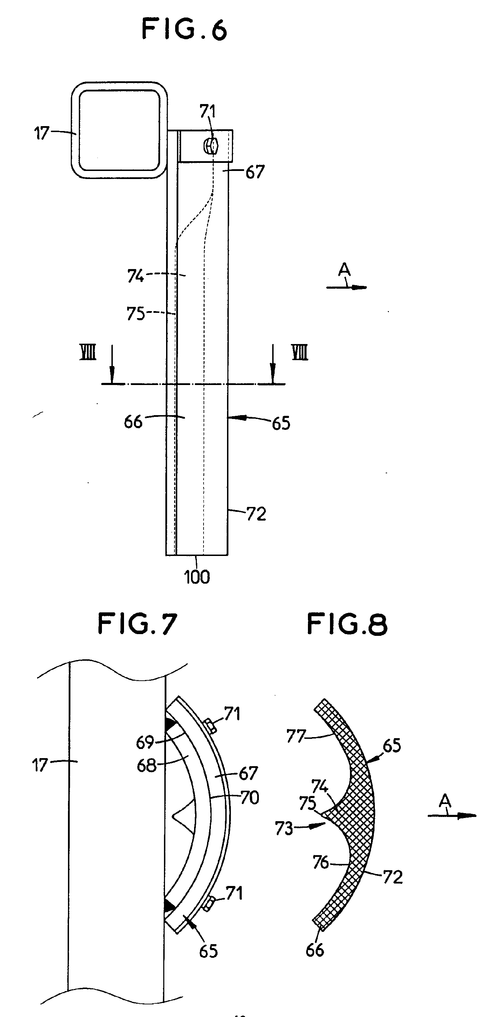

L'organe de modification du flux d'air (65), représenté sur les figures 6 à 8, est réalisé en matière plastique et sa forme est obtenue par injection. Il comporte une partie travaillante (66) et une partie de liaison (67) par l'intermédiaire de laquelle il est lié à la poutre porteuse (17). Celle-ci est, à cet effet, munie d'un support (68) présentant une face avant (69) ayant la forme complémentaire de la face arrière concave (70) de la partie de liaison (67) avec laquelle elle est destinée à être en contact. La liaison de l'organe de modification du flux d'air (65) au support (68) est réalisée au moyen de deux vis (71) vissées dans des trous filetés (non représentés) réalisés dans le support (68).

Alors que la face frontale (72) de la partie travaillante (66) est semblable à la face frontale (46) de la partie travaillante (39) de l'organe de modification du flux d'air (37) ou à la face frontale (60) de la partie travaillante (53) de l'organe de modification du flux d'air (38), la face déflectrice (73) de la partie travaillante (66) dudit organe de modification du flux d'air (65) présente une nervure (74) dirigée vers le haut et dont le sommet (75) est dirigé vers l'arrière, compte tenu du sens d'avance (A) au travail. La face déflectrice (73) présente ainsi deux surfaces concaves adjacentes (76, 77). Grâce à cette forme, le flux d'air est divisé en deux demi-flux par la nervure (74) qui sont chacun déviés latéralement et vers l'arrière par les surfaces concaves (76, 77) respectives.

Il convient encore de faire observer que la nervure (74) s'arrête au niveau de la partie de liaison (67) de sorte que cette dernière conserve la forme d'une paroi mince incurvée pour permettre à la partie travaillante (66) de se dégager vers l'arrière lorsqu'elle heurte un obstacle.

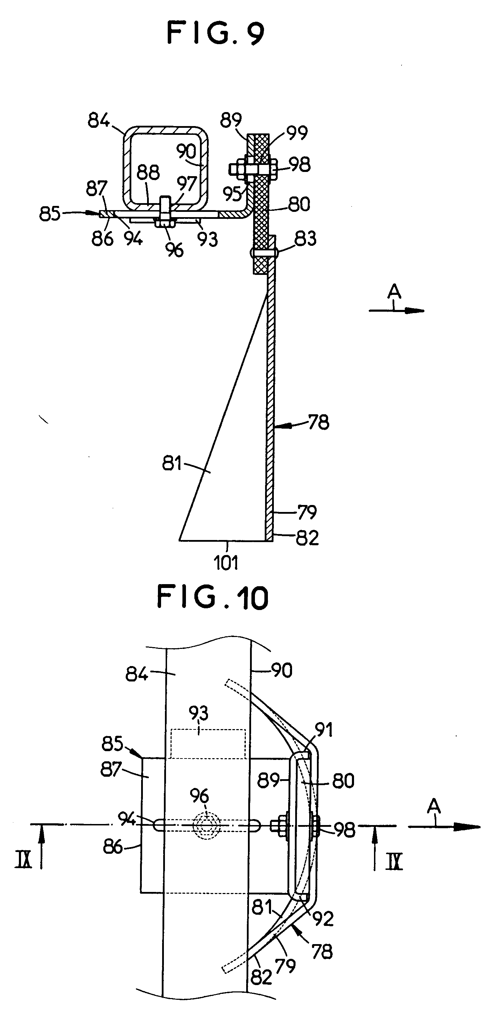

L'organe de modification du flux d'air (78), représenté sur les figures 9 et 10, diffère des organes de modification du flux d'air (37, 38, 65) précédents par le fait que la partie travaillante (79) et la partie de liaison (80) sont formées par deux pièces distinctes.

La partie de liaison (80) est constituée par une paroi mince plane réalisée en une matière flexible, en l'occurence du caoutchouc.

La partie travaillante (79), quant à elle, est constituée par une paroi mince incurvée réalisée en une matière rigide. Elle présente une face déflectrice (81) concave dirigée vers l'arrière et une face frontale (82) convexe dirigée vers l'avant. Dans sa partie supérieure, la partie travaillante (79) présente une forme environ plane de sorte qu'elle puisse être liée à la partie inférieure de la partie de liaison (80) au moyen de rivets (83) par exemple.

La partie de liaison (80) est liée à la poutre porteuse (84) au moyen d'un dispositf de liaison (85) comportant une équerre (86) qui présente une aile horizontale (87) en contact avec la face inférieure (88) de la poutre porteuse (84) présentant une section carrée, et une aile verticale (89) s'étendant à une certaine distance devant la face frontale (90) de la poutre porteuse (84).

Sur la figure 10, il apparaît que les bords latéraux (91, 92) de l'aile verticale (89) sont pliés vers l'avant, de sorte qu'en vue de dessus, l'aile verticale (89) comporte une forme de U dans lequel repose la partie de liaison (80).

La poutre porteuse (84), quant-à-elle, est munie d'un guide (93) contre lequel est appliqué un des bords latéraux de l'aile horizontale (87).

Dans l'aile horizontale (87) est réalisé un trou oblong (94) dirigé suivant la direction d'avance (A) au travail et dans l'aile verticale (89) est réalisé un trou oblong (95) dirigé verticalement.

L'équerre (86) est liée à la poutre porteuse (84) au moyen d'une vis (96) qui traverse le trou oblong (94) réalisé dans l'aile horizontale (87) et qui est vissée dans un trou fileté (97) réalisé dans la face inférieure (88) de la poutre porteuse (84).

La partie de liaison (80), quant à elle, est liée à l'aile verticale (89) au moyen d'un boulon (98) qui traverse un trou de passage (99) réalisé dans ladite partie de liaison (80) ainsi que le trou oblong (95) réalisé dans l'aile verticale (89).

Grâce à ce dispositif de liaison (85), il est possible de régler la position de l'organe de modification du flux d'air (78) tant en suivant la direction d'avance (A) au travail que dans la direction verticale.

Les organes de modification du flux d'air (37, 38, 65, 78) qui viennent d'être décrits, sont par ailleurs agencés de telle sorte que, lorsque leur partie travaillante (39, 53, 66, 79) s'efface en cas de rencontre avec un obstacle, elle ne puisse pas être happée par les rouleaux de conditionnement (22, 23).

Il convient du reste de noter que différentes combinaisons entre les différents exemples de réalisation qui viennent d'être décrits, sont tout à fait possibles. Ainsi par exemple, les organes de modification du flux d'air (37, 38, 65) pourraient être parfaitement liés à la poutre porteuse (17) au moyen d'un dispositif de liaison permettant le réglage de la position desdits organes par rapport aux organes de coupe (3, 4, 5) correspondants. Du reste, l'extrémité inférieure (100) de l'organe de modification du flux d'air (65) et l'extrémité inférieure (101) de l'organe de modification du flux d'air (78) pourront avoir, en vue suivant la direction d'avance (A) au travail, une forme semblable à l'extrémité inférieure (47) de l'organe de modification du flux d'air (37) ou à l'extrémité inférieure (61) de l'organe de modification du flux d'air (38).

On pourra enfin bien entendu apporter différentes modifications ou améliorations aux exemples de réalisation décrits sans que l'on ne sorte du cadre de la présente invention tel que défini par les revendications.

## Revendications

1. Faucheuse-conditionneuse comportant :
- au moins un groupe de fauche (1) muni d'organes de coupe (2, 3, 4, 5, 6) disposés au-dessus d'un carter (7) suivant une rangée transversale à la direction d'avance (A) au travail et comportant chacun au moins un outil de coupe (13), lesdits organes de coupe (2, 3, 4, 5, 6) tournant chacun autour d'un axe (8) correspondant dirigé vers le haut de telle sorte qu'il existe pour chaque organe de coupe intermédiaire (3, 4, 5) une zone (34, 36) où son (ses) outil(s) de coupe (13) se déplace(nt), compte tenu du sens d'avance (A) au travail, vers l'avant lors de la rotation dudit organe de coupe intermédiaire (3, 4, 5),
- un groupe de conditionnement (21) associé audit groupe de fauche (1), en particulier du type comportant deux rouleaux de conditionnement (22, 23) s'étendant également transversalement à la direction d'avance (A) au travail et tournant chacun autour de son axe longitudinal afin de faire passer entre eux le produit coupé et projeté vers l'arrière par les organes de coupe (2, 3, 4, 5, 6),
caractérisée par le fait qu'au moins dans ladite zone (34, 36) est prévu un organe stationnaire (37, 38, 65, 78) destiné à modifier le flux d'air engendré par ledit (lesdits) organe(s) de coupe intermédiaire(s) (3, 4, 5) correspondant(s), ledit organe de modification du flux d'air (37, 38, 65, 78) qui s'étend plus haut que ledit (lesdits) organe(s) de coupe intermédiaire(s) (3, 4, 5) correspondant(s), ayant son extrémité inférieure (47, 61) qui s'étend dans le voisinage du (desdits) organe(s) de coupe intermédiaire(s) (3, 4, 5) correspondant(s) et, en vue de dessus, au moins sensiblement à l'intérieur de la (des) trajectoire(s) extrême(s) (51, 52, 63) décrite(s) par le (lesdits) outil(s) de coupe (13) du (desdits) organe(s) de coupe intermédiaire(s) (3, 4, 5) correspondants.

2. Faucheuse-conditionneuse selon la revendication 1, caractérisée par le fait que la partie travaillante (39, 53, 66, 79) dudit organe de modification du flux d'air (37, 38, 65, 78) présente à l'arrière, compte tenu du sens d'avance (A) au travail, une face déflectrice (45, 59, 73, 81) s'étendant transversalement à la direction d'avance (A) au travail et dirigée vers le haut.

3. Faucheuse-conditionneuse selon la revendication 2, caractérisée par le fait que ladite face déflectrice (45, 59, 73, 81) est incurvée.

4. Faucheuse-conditionneuse selon la revendication 3, caractérisée par le fait que ladite face déflectrice (45, 59, 73, 81) est concave.

5. Faucheuse-conditionneuse selon la revendication 3 ou 4, caractérisée par le fait que la face déflectrice (73) comporte une nervure (74) dirigée vers le haut et dont le sommet (75) est dirigé vers l'arrière de sorte que ladite face déflectrice (73) présente deux surfaces concaves adjacentes (76, 77).

6. Faucheuse-conditionneuse selon l'une au moins des revendications 1 à 5, caractérisée par le fait que la partie travaillante (39, 53, 66, 79) dudit organe de modification du flux d'air (37, 38, 65, 78) présente, compte tenu du sens d'avance (A) au travail, une face frontale (46, 60, 72, 82) s'étendant transversalement à la direction d'avance (A) au travail et dirigée vers le haut.

7. Faucheuse-conditionneuse selon la revendication 6, caractérisée par le fait que ladite face frontale (46, 60, 72, 82) est incurvée.

8. Faucheuse-conditionneuse selon la revendication 7, caractérisée par le fait que ladite face frontale (46, 60, 72, 82) est convexe.

9. Faucheuse-conditionneuse selon l'une au moins des revendications 1 à 8, caractérisée par le fait que la partie travaillante (39, 53, 66, 79) dudit organe de modification du flux d'air (37, 38, 65, 78) est constituée par une paroi mince.

10. Faucheuse-conditionneuse selon la revendication 9, caractérisée par le fait que la paroi formant la partie travaillante (79) est rigide.

11. Faucheuse-conditionneuse selon la revendication 9, caractérisée par le fait que la paroi formant la partie travaillante (39, 53, 66) est déformable.

12. Faucheuse-conditionneuse selon la revendication 11, caractérisée par le fait que la paroi est réalisée en une matière flexible.

13. Faucheuse-conditionneuse selon la revendication 12, caractérisée par le fait que la paroi est réalisée en caoutchouc.

14. Faucheuse-conditionneuse selon l'une au moins des revendications 1 à 13, caractérisée par le fait que, en vue suivant la direction d'avance (A) au travail l'extrémité inférieure (47, 61, 100, 101) de la partie travaillante (39, 53, 66, 79) de l'organe de modification du flux d'air (37, 38, 65, 78) présente une forme qui suit au moins sensiblement le contour extérieur supérieur du volume engendré par l'(les) organe(s) de coupe (3, 4, 5) correspondant(s) lors de leur rotation.

15. Faucheuse-conditionneuse selon l'une au moins des revendications 1 à 14, caractérisée par le fait que, en vue suivant la direction d'avance (A) au travail, l'extrémité inférieure (47, 61, 100, 101) de la partie travaillante (39, 53, 66, 79) de l'organe de modification du flux d'air (37, 38, 65, 78) est droite et s'étend au moins sensiblement horizontalement.

16. Faucheuse-conditionneuse selon l'une au moins des revendications 1 à 15, caractérisée par le fait, qu'au moins la partie travaillante (39, 66, 79) d'un organe de modification du flux d'air (37, 65, 78) associé à deux organes de coupe voisins (3, 4), dont les sens de rotation (10, 9) divergent vers l'avant, a une largeur qui est au plus égale à la distance séparant les deux axes de rotation (8) de ces organes de coupe (3, 4).

17. Faucheuse-conditionneuse selon la revendication 16, caractérisée par le fait que ladite largeur est environ égale à la moitié de la distance séparant les axes de rotation (8) desdits organes de coupe (3, 4).

18. Faucheuse-conditionneuse selon la revendication 16 ou 17, caractérisée par le fait qu'au moins la partie travaillante (39, 66, 79) d'un organe de modification du flux d'air (37, 65, 78) associé à deux organes de coupe voisins (3, 4) dont les sens de rotation (10, 9) divergent vers l'avant, s'étend en vue suivant la direction d'avance (A) au travail, au moins sensiblement symétriquement entre les axes de rotation (8) de ces deux organes de coupe (3, 4).

19. Faucheuse-conditionneuse selon l'une au moins des revendications 1 à 18, caractérisée par le fait qu'en vue de dessus, au moins l'extrémité inférieure (47, 61, 100, 101 de la partie travaillante (39, 53, 66, 79) d'un organe de modification du flux d'air (37, 38, 65, 78) s'étend dans le voisinage de la ligne (48) joignant les axes de rotation (8) des deux organes de coupe (3, 4, 5, 6) correspondants ou devant cette ligne (48).

20. Faucheuse-conditionneuse selon l'une au moins des revendications 1 à 19, caractérisée par le fait qu'un dispositif de liaison (44, 58, 71, 85) lie l'organe de modification du flux d'air (37, 38, 65, 78) de manière amovible à celle-ci.

21. Faucheuse-conditionneuse selon la revendication 20, caractérisée par le fait que ledit dispositif de liaison (85) comporte des moyens de réglage (86, 94, 95, 96, 98) permettant le réglage de la position notamment de la partie travaillante (79) de l'organe de modification du flux d'air (78) au moins sensiblement suivant la direction d'avance (A) au travail et/ou au moins sensiblement suivant une direction en hauteur.

22. Faucheuse-conditionneuse selon l'une au moins des revendications 1 à 21, caractérisée par le fait que l'organe de modification du flux d'air (37, 38, 65, 78) comporte une partie de liaison (40, 54, 67, 80) déformable.

23. Faucheuse-conditionneuse selon la revendication 22, caractérisée par le fait que ladite partie de liaison (40, 54, 67, 80) est réalisée en une matière flexible.

24. Faucheuse-conditionneuse selon la revendication 23, caractérisée par le fait que la partie de liaison (40, 54, 80) est réalisée en caoutchouc.

25. Faucheuse-conditionneuse selon l'une au moins des revendications 20 à 24, caractérisée par le fait que la partie de liaison (40, 54, 67, 80) présente une forme de paroi mince.

26. Faucheuse-conditionneuse selon la revendication 25, caractérisée par le fait que la partie de liaison (40, 54, 67) présente une forme de paroi incurvée, dont la concavité est dirigée vers l'arrière, compte tenu du sens d'avance (A) au travail.

27. Faucheuse-conditionneuse selon l'une au moins des revendications 1 à 26, caractérisée par le fait que l'organe de modification du flux d'air (37, 38, 65) est constitué par une pièce unique formant à la fois la partie travaillante (39, 53, 66) et la partie de liaison (40, 54, 67).

## Patentansprüche

1. Mäh- und Konditioniermaschine mit:
- zumindest einer Mähergruppe (1), ausgestattet mit Schneidorganen (2, 3, 4, 5, 6), die oberhalb eines Gehäuses (7) in einer quer zur Arbeitsvorschubrichtung (A) verlaufenden Reihe angeordnet sind und jeweils zumindest ein Schneidwerkzeug (13) aufweisen, welche Schneidorgane (2, 3, 4, 5, 6) jeweils um eine entsprechende aufrechtstehende Achse (8) derart rotieren, dass fur jedes dazwischenliegende Schneidorgan (3, 4, 5) eine Zone (34, 36) vorhanden ist, wo sich sein(e) Schneidwerkzeug(e) (13) in bezug auf die Arbeitsvorschubrichtung (A) bei der Rotation des dazwischenliegenden Schneidorgans (3, 4, 5) nach vorne bewegt (bewegen),
- einer der Mähergruppe (1) zugeordneten Konditioniergruppe (21) insbesondere des Typs mit zwei Konditionierwalzen (22, 23), die sich ebenfalls quer zur Arbeitsvorschubrichtung (A) erstrecken und jeweils um ihre Längsachse rotieren, um das von den Schneidorganen (2, 3, 4, 5, 6) geschnittene und nach hinten geworfene Schnittgut dazwischen durchtreten zu lassen,
dadurch gekennzeichnet, dass zumindest in der Zone (34, 36) ein stationäres Organ (37, 38, 65, 78) vorgesehen ist, das den von dem (den) entsprechenden dazwischenliegenden Schneidorgan(en) (3, 4, 5) erzeugten Luftstrom modifizieren soll, welches Organ (37, 38, 65, 78) zur Modifikation des Luftstromes, das sich weiter oben befindet als das (die) entsprechende(n) dazwischenliegende(n) Schneidorgan(e) (3, 4, 5), ein unteres Ende (47, 61) hat, das sich in der Nähe des (der) entsprechenden dazwischenliegenden Schneidorgans (Schneidorgane) (3, 4, 5) und, in Draufsicht, zumindest im wesentlichen innerhalb der von dem (den) Schneidwerkzeug(en) (13) des (der) entsprechenden dazwischenliegenden Schneidorgan(en) (3, 4, 5) beschriebenen äussersten Umlaufbahn(en) (51, 52, 63) befindet.

2. Mäh- und Konditioniermaschine nach Anspruch 1, dadurch gekennzeichnet, dass der wirksame Teil (39, 53, 66, 79) des Organs (37, 38, 65, 78) zur Modifikation des Luftstroms an der Rückseite, bezogen auf die Arbeitsvorschubrichtung (A), eine Ablenkfläche (45, 59, 73, 81) aufweist, die quer zur Arbeitsvorschubrichtung (A) verläuft auf nach oben gerichtet ist.

3. Mäh- und Konditioniermaschine nach Anspruch 2, dadurch gekennzeichnet, dass die Ablenkfläche (45, 59, 73, 81) gekrümmt ist.

4. Mäh- und Konditioniermaschine nach Anspruch 3, dadurch gekennzeichnet, dass die Ablenkfläche (45, 59, 73, 81) konkav ist.

5. Mäh- und Konditioniermaschine nach Anspruch 3 oder 4, dadurch gekennzeichnet, dass die Ablenkfläche (73) eine nach oben verlaufende Rippe (74) aufweist, deren Scheitel (75) derart nach hinten gerichtet ist, dass die Ablenkfläche (73) zwei benachbarte konkave Flächen (76, 77) aufweist.

6. Mäh- und Konditioniermaschine nach zumindest einem der Ansprüche 1 bis 5, dadurch gekennzeichnet, dass der wirksame Teil (39, 53, 66, 79) des Organs (37, 38, 65, 78) zur Modifikation des Luftstromes, in Arbeitsvorschubrichtung (A) betrachtet, eine Vorderseite (46, 60, 72, 82) aufweist, die quer zur Arbeitsvorschubrichtung (A) und nach oben zu verläuft.

7. Mäh- und Konditioniermaschine nach Anspruch 6, dadurch gekennzeichnet, dass die Vorderseite (46, 60, 72, 82) gekrümmt ist.

8. Mäh- und Konditioniermaschine nach Anspruch 7, dadurch gekennzeichnet, dass die Vorderseite (46, 60, 72, 82) konvex ist.

9. Mäh- und Konditioniermaschine nach zumindest einem der Ansprüche 1 bis 8, dadurch gekennzeichnet, dass der wirksame Teil (39, 53, 66, 79) des Organs (37, 38, 65, 78) zur Modifikation des Luftstroms aus einer dünnen Wand besteht.

10. Mäh- und Konditioniermaschine nach Anspruch 9, dadurch gekennzeichnet, dass die den wirksamen Teil (79) bildende Wand starr ist.

11. Mäh- und Konditioniermaschine nach Anspruch 9, dadurch gekennzeichnet, dass die den wirksamen Teil (39, 53, 66) bildende Wand deformierbar ist.

12. Mäh- und Konditioniermaschine nach Anspruch 11, dadurch gekennzeichnet, dass die Wand aus einem flexiblen Material hergestellt ist.

13. Mäh- und Konditioniermaschine nach Anspruch 12, dadurch gekennzeichnet, dass die Wand aus Kautschuk hergestellt ist.

14. Mäh- und Konditioniermaschine nach zumindest einem der Ansprüche 1 bis 13, dadurch gekennzeichnet, dass das untere Ende (47, 61, 100, 101) des wirksamen Teils (39, 53, 66, 79) des Organs (37, 38, 65, 78) zur Modifikation des Luftstroms, in Arbeitsvorschubrichtung (A) betrachtet, eine Form aufweist, die zumindest im wesentlichen dem oberen äusseren Umriss des von dem (den) entsprechenden Schneidorgan(en) (3, 4, 5) bei seiner (ihrer) Rotation erzeugten Raumes folgt.

15. Mäh- und Konditioniermaschine nach zumindest einem der Ansprüche 1 bis 14, dadurch gekennzeichnet, dass, in Arbeitsvorschubrichtung (A) betrachtet, das untere Ende (47, 61, 100, 101) des wirksamen Teils (39, 53, 66, 79) des Organs (37, 38, 65, 78) zur Modifikation des Lufstroms gerade ist und zumindest im wesentlichen horizontal verläuft.

16. Mäh- und Konditioniermaschine nach zumindest einem der Ansprüche 1 bis 15, dadurch gekennzeichnet, dass zumindest der wirksame Teil (39, 66, 79) eines Organs (37, 65, 78) zur Modifikation des Luftstroms, das zwei benachbarten Schneidorganen (3, 4) zugeordnet ist, deren Drehsinne (10, 9) nach vorne divergieren, eine Breite hat, die höchstens gleich dem Abstand zwischen den beiden Rotationsachsen (8) dieser Schneidorgane (3, 4) ist.

17. Mäh- und Konditioniermaschine nach Anspruch 16, dadurch gekennzeichnet, dass die Breite etwa gleich der Hälfte des Abstandes zwischen den Rotationsachsen (8) der Schneidorgane (3, 4) ist.

18. Mäh- und Konditiniermaschine nach Anspruch 16 oder 17, dadurch gekennzeichnet, dass sich zumindest der wirksame Teil (39, 66, 79) eines Organs (37, 65, 78) zur Modifikation des Luftstroms, das zwei benachbarten Schneidorganen (3, 4) zugeordnet ist, deren Drehsinne (10, 9) nach vorne divergieren, in Arbeitsvorschubrichtung (A) betrachtet, zumindest im wesentlichen symmetrisch zwischen den Rotationsachsen (8) dieser beiden Schneidorgane (3, 4) erstreckt.

19. Mäh- und Konditioniermaschine nach zumindest einem der Ansprüche 1 bis 18, dadurch gekennzeichnet, dass sich, in Draufsicht, zumindest das untere Ende (47, 61, 100, 101) des wirksamen Teils (39, 53, 66, 79) eines Organs (37, 38, 65, 78) zur Modifikation des Luftstroms in der Nähe der Linie (48) befindet, die die Rotationsachsen (8) der entsprechenden beiden Schneidorgane (3, 4, 5, 6) verbindet oder vor dieser Linie (48) befindet.

20. Mäh- und Konditioniermaschine nach zumindest einem der Ansprüche 1 bis 19, dadurch gekennzeichnet, dass eine Verbindungseinrichtung (44, 58, 71, 85) das Organ (37, 38, 65, 78) zur Modifikation des Luftstroms lösbar mit ihr verbindet.

21. Mäh- und Konditioniermaschine nach Anspruch 20, dadurch gekennzeichnet, dass die Verbindungseinrichtung (85) Verstellmittel (86, 94, 95, 96, 98) aufweist, die die Einstellung der Position insbesonders des wirksamen Teils (79) des Organs (78) zur Modifikation des Luftstroms zumindest im wesentlichen entlang der Arbeitsvorschubrichtung (A) und/oder zumindest im wesentlichen entlang einer Höhenrichtung ermöglichen.

22. Mäh- und Konditioniermaschine nach zumindest einem der Ansprüche 1 bis 21, dadurch gekennzeichnet, dass das Organ (37, 38, 65, 78) zur Modifikation des Luftstroms einen deformierbaren Verbindungsteil (40, 54, 67, 80) aufweist.

23. Mäh- und Konditioniermaschine nach Anspruch 22, dadurch gekennzeichnet, dass der Verbindungsteil (40, 54, 67, 80) aus einem flexiblen Material ausgeführt ist.

24. Mäh- und Konditioniermaschine nach Anspruch 23, dadurch gekennzeichnet, dass der Verbindungsteil (40, 54, 80) aus Kautschuk hergestellt ist.

25. Mäh- und Konditioniermaschine nach zumindest einem der Ansprüche 20 bis 24, dadurch gekennzeichnet, dass der Verbindungsteil (40, 54, 67, 80) die Form einer dünnen Wand aufweist.

26. Mäh- und Konditioniermaschine nach Anspruch 25, dadurch gekennzeichnet, dass der Verbindungsteil (40, 54, 67) die Form einer gekrümmten Wand hat, deren konkave Höhlung in Arbeitsvorschubrichtung (A) nach hinten gerichtet ist.

27. Mäh- und Konditioniermaschine nach zumindest einem der Ansprüche 1 bis 26, dadurch gekennzeichnet, dass das Organ (37, 38, 65) zur Modifikation des Luftstroms aus einem einzigen Stück gebildet ist, das sowohl den wirksamen Teil (39, 53, 66) als auch den Verbindungsteil (40, 54, 67) bildet.

## Claims

1. A mower conditioner comprising:
- at least one mowing group (1) equipped with cutter members (2, 3, 4, 5, 6) arranged above a housing (7) following a row transverse to the direction of advance (A) during work and each having at least one cutting tool (13), the said cutter members (2, 3, 4, 5, 6) each turning around a corresponding upwardly directed axis (8) in such a way that there is for each intermediary cutter member (3, 4, 5) a zone (34, 36) where its cutting tool(s) (13) moves (move), taking account of the direction of advance (A) during work, towards the front at the time of the rotation of the said intermediary cutter member (3, 4, 5),
- a conditioning group (21) associated with the said mowing group (1), particularly of the type having two conditioning rollers (22, 23) also extending transversely to the direction of advance (A) during work and each turning around its longitudinal axis so as to make the produce which has been cut and thrown backwards by the cutter members (2, 3, 4, 5, 6) pass between the said rollers (22, 23),
characterised in that at least in the said zone (34, 36) there is provided a stationary element (37, 38, 65, 78) intended to modify the flow of air brought about by the corresponding said intermediary cutter member(s) (3, 4, 5), the said element for modifying the flow of air (37, 38, 65, 78) which extends higher than the corresponding said intermediary cutter member(s) (3, 4, 5), having its lower end (47, 61) which extends in the vicinity of the corresponding said intermediary cutter member(s) (3, 4, 5) and, seen from above, at least approximately within the outer trajectory(ies) (51, 52, 63) described by the said cutting tool(s) (13) of the corresponding said intermediary cutter member(s) (3, 4, 5).

2. A mower conditioner in accordance with claim 1, characterised in that the working part (39, 53, 66, 79) of the said element for modifying the flow of air (37, 38, 65, 78) has at the rear, taking account of the direction of advance (A) during work, a deflector face (45, 59, 73, 81) extending transversely to the direction of advance (A) during work and directed upwardly.

3. A mower conditioner in accordance with claim 2, characterised in that the said deflector face (45, 59, 73, 81) is curved.

4. A mower conditioner in accordance with claim 3, characterised in that the said deflector face (45, 59, 73, 81) is concave.

5. A mower conditioner in accordance with claim 3 or 4, characterised in that the deflector face (73) has an upwardly directed rib (74) the tip (75) of which is directed towards the rear so that the said deflector face (73) has two adjacent concave surfaces (76, 77).

6. A mower conditioner in accordance with at least one of claims 1 to 5, characterised in that the working part (39, 53, 66, 79) of the said element for modifying the flow of air (37, 38, 65, 78) has, taking account of the direction of advance (A) during work, a front face (46, 60, 72, 82) extending transversely to the direction of advance (A) during work and directed upwards.

7. A mower conditioner in accordance with claim 6, characterised in that the said front face (46, 60, 72, 82) is curved.

8. A mower conditioner in accordance with claim 7, characterised in that the said front face (46, 60, 72, 82) is convex.

9. A mower conditioner in accordance with at least one of claims 1 to 8, characterised in that the working part (39, 53, 66, 79) of the said element for modifying the flow of air (37, 38, 65, 78) is formed by a thin wall.

10. A mower conditioner in accordance with claim 9, characterised in that the wall forming the working part (79) is rigid.

11. A mower conditioner in accordance with claim 9, characterised in that the wall forming the working part (39, 53, 66) is deformable.

12. A mower conditioner in accordance with claim 11, characterised in that the wall is made in a flexible material.

13. A mower conditioner in accordance with claim 12, characterised in that the wall is made of rubber.

14. A mower conditioner in accordance with at least one of claims 1 to 13, characterised in that, seen in the direction of advance (A) during work, the lower end (47, 61, 100, 101) of the working part (39, 53, 66, 79) of the element for modifying the flow of air (37, 38, 65, 78) has a shape which follows at least approximately the upper outside contour of the volume brought about by the corresponding cutter member(s) (3, 4, 5) during their rotation.

15. A mower conditioner in accordance with at least one of claims 1 to 14, characterised in that, seen in the direction of advance (A) during work, the lower end (47, 61, 100, 101) of the working part (39, 53, 66, 79) of the element for modifying the flow of air (37, 38, 65, 78) is straight and extends at least approximately horizontally.

16. A mower conditioner in accordance with at least one of claims 1 to 15, characterised in that at least the working part (39, 66, 79) of one element for modifying the flow of air (37, 65, 78) associated with two neighbouring cutter members (3, 4), whose directions of rotation (10, 9) diverge towards the front, has a width which is at most equal to the distance separating the two axes of rotation (8) of these cutter members (3, 4).

17. A mower conditioner in accordance with claim 16, characterised in that the said width is approximately equal to half the distance separating the axes of rotation (8) of the said cutter members (3, 4).

18. A mower conditioner in accordance with claim 16 or 17, characterised in that at least the working part (39, 66, 79) of one element for modifying the flow of air (37, 65, 78) associated with two neighbouring cutter members (3, 4), whose directions of rotation (10, 9) diverge towards the front, extends when seen in the direction of advance (A) during work, at least approximately symmetrically between the axes of rotation (8) of these two cutter members (3, 4).

19. A mower conditioner in accordance with at least one of claims 1 to 18, characterised in that, when seen from above, at least the lower end (47, 61, 100, 101) of the working part (39, 53, 66, 79) of one element for modifying the flow of air (37, 38, 65, 78) extends in the vicinity of the line (48) joining the axes of rotation (8) of the two corresponding cutter members (3, 4, 5, 6) or in front of this line (48).

20. A mower conditioner in accordance with at least one of claims 1 to 19, characterised in that a connecting device (44, 58, 71, 85) connects the element for modifying the flow of air (37, 38, 65, 78) in a detachable manner to the said mower conditioner.

21. A mower conditioner in accordance with claim 20, characterised in that the said connecting device (85) has adjustment means (86, 94, 95, 96, 98) allowing the adjustment of the position particularly of the working part (79) of the element for modifying the flow of air (78) at least approximately in the direction of advance (A) during work and/or at least approximately in height.

22. A mower conditioner in accordance with at least one of claims 1 to 21, characterised in that the element for modifying the flow of air (37, 38, 65, 78) has a deformable connecting part (40, 54, 67, 80).

23. A mower conditioner in accordance with claim 22, characterised in that the said connecting part (40, 54, 67, 80) is made in a flexible material.

24. A mower conditioner in accordance with claim 23, characterised in that the connecting part (40, 54, 80) is made of rubber.

25. A mower conditioner in accordance with one at least of claims 20 to 24, characterised in that the connecting part (40, 54, 67, 80) takes the form of a thin wall.

26. A mower conditioner in accordance with claim 25, characterised in that the connecting part (40, 54, 67) takes the form of a curved wall, whose concavity is directed towards the rear, taking account of the direction of advance (A) during work.

27. A mower conditioner in accordance with at least one of claims 1 to 26, characterised in that the element for modifying the flow of air (37, 38, 65) is made up from a single piece forming at once the working part (39, 53, 66) and the connecting part (40, 54, 67).
